(19) Europäisches Patentamt
European Patent Office
Office européen des brevets

(11) Publication number: 0 095 594
B1

# (12) EUROPEAN PATENT SPECIFICATION

(45) Date of publication of patent specification: 27.08.86

(51) Int. Cl.[4]: C 08 G 18/76, C 08 G 18/48, C 08 L 97/02, D 21 J 1/04

(21) Application number: 83104448.2

(22) Date of filing: 05.05.83

## (54) Stable aqueous polyisocyanate emulsions.

(30) Priority: 28.05.82 US 383024

(43) Date of publication of application:
07.12.83 Bulletin 83/49

(45) Publication of the grant of the patent:
27.08.86 Bulletin 86/35

(84) Designated Contracting States:
AT BE CH DE FR GB IT LI NL SE

(58) References cited:
DE-A-2 817 203
DE-A-2 848 468
DE-B-2 711 958

(73) Proprietor: THE DOW CHEMICAL COMPANY
2030 Dow Center Abbott Road P.O. Box 1967
Midland, MI 48640 (US)

(72) Inventor: Bosscher, Filippus
DeLinden 2
NL-9945 P2 Wagenborgen (NL)
Inventor: Penfold, John
Eschenstrasse 15
CH-9037 Engelburg (CH)
Inventor: Reich, Klaus W.
Sonnmattweg 4
CH-9034 Eggersriet (CH)
Inventor: Zandvoort, Albertus
Nieuwstad 11
NL-9905 PH Holwierde (NL)

(74) Representative: Henkel, Feiler, Hänzel & Partner
Möhlstrasse 37
D-8000 München 80 (DE)

EP 0 095 594 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

Field of the invention

This invention relates to isocyanate compositions and is more particularly concerned with emulsifiable polyisocyanates and with processes for their preparation and their use as binder for the preparation of particle board, hard board, foam scrap, wafer board and foundry cores.

Description of the prior art

The use of organic polyisocyanates, particularly polymethylene polyphenyl polyisocyanates, as binders or components of binders for the preparation of particle boards and like products is now widely recognized; see, for example, U.S. Patents 3,428,592, 3,440,189, 3,557,263, 3,636,199, 3,870,665, 3,919,017, 3,930,110 and 4,257,995. In a particular mode of application the polyisocyanates have been used in the form of aqueous emulsions. The latter are applied, e.g., in the form of a spray, to the particles of wood or like cellulosic material which are employed to form the composite. The coated particles are then molded by subjecting them to the action of heat and pressure in order to prepare the final composite. In order to use the polyisocyanates in the form of aqueous emulsions in the above manner it is desirable that the emulsion be stable over a period of at least several hours and, preferably, several days. Thus, in commercial production of particle boards, there can be unscheduled interruptions in operations for a variety of reasons. If the aqueous emulsion utilized as the binder has only very limited stability, it is possible that a prolonged and unexpected interruption in the composite manufacturing process can result in deterioration of the binder emulsion to the point at which the latter has to be discarded in its entirety. The use of the term "stable" in the above context encompasses not only the maintenance of the emulsified state but the reaction, or rather lack of reaction, of the polyisocyanate with the water used in making the emulsion.

A number of aqueous emulsions of polyisocyanates have been described whose primary intended use is as binders for particle board. Illustratively, German Specification 2703271 describes the use of polyglycols having molecular weights from 4,000 to 20,000 as emulsifying agents for polyisocyanates of which methylenebis(phenyl isocyanate) is specifically exemplified. U.S. 4,260,532 reports that the stability of the emulsions in the German specification can be improved by replacing a part or the whole of the polyglycol with a water-soluble polyamide such as polyvinylpyrrolidone.

U.S 3,996,154 relates to the preparation of aqueous emulsions of polyisocyanates in which the emulsifying agent is derived by reaction of a minor amount of the polyisocyanate with the mono-lower-alkyl ether of a polyethylene glycol. The emulsifying agent can be preformed or formed *in situ* by adding the polyethylene glycol ether to the bulk of the polyisocyanate. The polyisocyanate may be present as prepolymer obtained by reacting the polyisocyanate with a polyol. The emulsions prepared as described in the above reference are shown in U.S. 4,110,397 to be useful as binders in the preparation of particle board.

German Offenlengungsschrift 2,921,681 (and corresponding European application 19844) describes aqueous emulsions of polyisocyanate in which the emulsifying agent is the product of reaction of a polyisocyanate and a mono-alcohol which comprises a polyethylene glycol having one of its hydroxyl groups blocked or replaced by a variety of different groups none of which, with the sole exception of an epoxy group, is reactive with isocyanate. The companion German Offenlegungsschrift 2,921,726 (and corresponding European application 19860) describes the use of these emulsions as particle board binders.

We have now found that emulsifiable isocyanate compositions with advantageous properties can be prepared by reaction of polymethylene polyphenyl polyisocyanates with a particular group of derivatives of block copolymers of ethylene oxide and propylene oxide and that aqueous emulsions having advantageous properties can be obtained by dispersing said isocyanates in water.

Summary of the invention

This invention comprises isocyanate compositions capable of yielding an emulsion on admixture with water, said compositions comprising the product of reaction of

(a) a polymethylene polyphenyl polyisocyanate containing from 10% to 90% by weight of methylene-bis(phenyl isocyanate) the remainder of said polyisocyanate comprising oligomers of functionality greater than 2.0;

(b) from 0.001 to 0.2 equivalents, per equivalent of said polyisocyanate, of a hydroxyl containing compound selected from the class consisting of at least one compound having the formula

$$R^1\text{-}(CH_2CH_2O)_{3-25}\text{-}R^2 \qquad (I)$$

wherein $R^1$ represents a group selected from the class consisting of alkoxy, carbalkoxy, aryloxy and

$$HO\text{-}\left(\text{-}CH_2\underset{CH_3}{CH}\text{-}O\text{-}\right)_{2-15}\text{—} \qquad \text{and;}$$

$R^2$ represents a group having the formula

$$-\left(-CH_2-\underset{CH_3}{\underset{|}{CH}}-O-\right)_{2-15}-H$$

The invention also comprises the aqueous emulsions derived by dispersing said prepolymers in water. The invention also comprises a process for the preparation of particle boards using as the binder composition the aqueous emulsions derived from said prepolymers.

The term "alkoxy" means the group R—O—, the term "carbalkoxy" means the group

$$R-\overset{O}{\overset{\|}{C}}-O-,$$

wherein in both cases R is alkyl from 1 to 20 carbon atoms, inclusive, such as methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl and eicosyl including isomeric forms thereof.

The term "aryloxy" means the group R'—O— wherein R' is aryl, i.e., the radical obtained by removing one hydrogen atom from a nuclear carbon atom of an aromatic hydrocarbon. Illustrative of aryl are phenyl, naphthyl, biphenylyl and alkyl substituted phenyl such as tolyl, xylyl, butylphenyl, octylphenyl, nonylphenyl, decylphenyl and octadecylphenyl.

Detailed description of the invention

The polyisocyanate compositions of the invention are conveniently prepared by bringing together the polyisocyanate and the glycol or derivative in the appropriate proportions set forth above. The reaction can be carried out at ambient temperatures (of the order of 20°C) but is preferably carried out at elevated temperatures up to 75°C or higher in order that the reaction can be completed in a relatively short period of time. The progress of the reaction can be followed, if desired, by routine analytical procedures such as infrared spectroscopy and the like or by following the change in viscosity of the reaction mixture. The end point of the reaction is generally signaled by the lack of any further increase in viscosity of the reaction mixture. Depending upon the particular combination of polyisocyanate and hydroxyl-containing compound used and on the relative proportions in which they are employed, the viscosity of the prepolymer obtained will generally lie within the range of 50 to 5 000 mPas at 25°C. Preferably the viscosity of the prepolymers prepared in accordance with the invention lies within the range of 200 to 1 500 mPas at 25°C.

The polymethylene polyphenyl polyisocyanates which are employed in preparing the above compositions contain from 10% to 90% by weight of methylenebis(phenyl isocyanate) the remainder of the mixture being polymethylene polyphenyl polyisocyanates having a functionality higher than 2.0. Such polyisocyanates and methods for their preparation are well known in the art; see, for example, U.S. Patents 2,683,730, 2,950,263, 3,012,008 and 3,097,191. These polyisocyanates are also available in various modified forms. One such form comprises a polymethylene polyphenyl polyisocyanate as above which has been subjected to heat treatment, generally at temperatures from 105°C to 300°C, until the viscosity (at 25°C) has increased to a value within the range of 800 to 3,000 mPas. Another modified polymethylene polyphenyl polyisocyanate is one which has been treated with minor amounts of an epoxide to reduce the acidity thereof in accordance with U.S. Patent 3,793,362.

Particularly preferred polymethylene polyphenyl polyisocyanates are those which contain from 25% to 65% by weight of methylenebis(phenyl isocyanate), the remainder of the mixture being oligomeric polymethylene polyphenyl polyisocyanates of functionality higher than 2.0.

The hydroxyl-containing compounds which are employed in the preparation of the isocyanate compositions of the invention are those represented by the various formulae above. Said hydroxyl-containing compounds encompass the following types:

(i) Compounds having the formula:

$$R-(CH_2-CH_2-O)_{3-25}\left(-CH_2-\underset{CH_3}{CH}-O-\right)_{2-15}-H$$

where R is selected from the class consisting of aryloxy, alkoxy or carbalkoxy, wherein the alkyl moiety of the alkoxy group or carbalkoxy group contains 1 to 20 carbon atoms as discussed and exemplified above; and

(ii) Compounds having the formula:

$$HO-\left(-CH_2-\underset{CH_3}{\underset{|}{CH}}-O-\right)_{2-15}-(CH_2-CH_2-O)_{3-25}\left(-CH_2-\underset{CH_3}{CH}-O-\right)_{2-15}-H$$

As will be seen from the above formulae, each of the compounds contains a block of ethylene oxide residues which can vary in number from 2 to 25. The various compounds can be derived by conventional procedures from a polyethylene glycol containing the appropriate number of ethylene oxide residues within the above range. For example, the compounds of group (i) wherein R is alkoxy or aryloxy can be obtained from the polyethylene glycol starting material by converting the latter to the corresponding mono-alkyl or aryl ether using etherification techniques well known in the art, for example, by reacting the mono-sodium derivative of the glycol with the appropriate alkyl halide using the Williamson reaction, J. Chem. Soc. *4*, 229, 1852. The mono-alkyl ether so obtained is then propoxylated by reaction, generally in the presence of an alkali metal, with appropriate amount of propylene oxide residues within the range of 2 to 15. The conditions employed in the propoxylation can be any of those conventionally employed in the art; see, for example, U.S. 3,423,344. Similarly, those compounds of group (i) wherein R is carbalkoxy as hereinbefore defined can be prepared by converting the polyethylene glycol starting material to the corresponding mono-ester by esterification with the appropriate mono-carboxylic acid or acid halide under conditions well recognized in the art for such esterification. The resulting mono-ester is then propoxylated in the manner described above.

The compounds of group (ii) are prepared from the polyethylene glycol starting material by propoxylation using the appropriate amount of propylene oxide to give the desired number of residues. The propoxylation conditions are as described above.

While all the above types of hydroxyl-containing compounds can be used in preparing the isocyanate compositions of the invention, we prefer to use the compounds of type (ii) and more particularly prefer to use compounds of this type in which the number of ethylene oxide residues is of the order of 14 to 22 and the total number of propylene oxide residues is the order of 4 to 110.

In a particularly preferred embodiment of the invention the hydroxyl-containing compounds employed to make the emulsifiable isocyanates are those of type (ii) which have a molecular weight in the range of 1 200 to 1 400 and contain from 20% to 50% by weiht of propylene oxide residues.

As set forth above, the isocyanate compositions, which are prepared by reaction of the polymethylene polyphenyl polyisocyanates and the hydroxyl-containing compounds, are stable on storage over prolonged periods of time, i.e., do not show any significant tendency to decrease in isocyanate content or change in any other manner to any significant degree. Further, the compositions, even after prolonged storage, are readily emulsifiable when admixed with water. The aqueous emulsions so obtained are themselves sufficiently stable over a period of several hours to permit their employment, for any of the various uses to which they can be applied, over an extended period without risk of loss of isocyanate content or emulsifiability. This is in contrast to the behavior of a number of emulsified polyisocyanates previously available, many of which had to be employed substantially immediately after formation of the emulsion if serious degradation of the isocyanate was to be avoided.

The aqueous emulsions so prepared are useful as adhesives for a wide variety of purposes and the above stability behavior is an important finding in this regard. In particular, the aqueous emulsions derived from the isocyanate compositions of the invention are useful as binders for the formation of particle board, wafer board, and the like, from cellulosic particulate material and the like. The fact that the emulsions remain stable and usable over a period of several hours represents a particular advantage for the reasons discussed above. The methods by which polyisocyanate binders, including aqueous emulsions of polyisocyanates, are employed in the preparation of particle boards are already described fully in the art cited supra, particularly in U.S. 4,257,995, the disclosures of which in this regard are specifically incorporated by reference herein.

Generally speaking, the emulsions derived from the emulsifiable isocyanates of the invention are prepared by dispersion of the latter, using appropriate mechanical agitation if necessary, in an amount of water within the range of 50 to 1 000 parts by weight per 100 parts by weight of isocyanate composition. The precise amounts of water used in any given instance will depend upon the particular use to which the resulting emulsion is to be applied. Where the emulsion is to be used as a binder in the formation of particle boards and the like, it is generally preferred to employ compositions in which the amount of water is within the range of 100 to 500 parts by weight per 100 parts by weight of isocyante composition.

It is noteworthy that, in contrast to prior art emulsions of polyisocyanates, the emulsions produced in accordance with the present invention do not require the use of additional materials such as surfactants, stabilizing agents and the like, in order to maintain stability of the emulsion.

The following examples describe the manner and process of making and using the invention and set forth the best mode contemplated by the inventors of carrying out the invention but are not to be construed as limiting.

Example 1

An emulsifiable isocyanate was prepared by admixing 100 parts by weight of polymethylene polyphenyl polyisocyanate [isocyanate equivalent=137; viscosity at 25°C=180 mPas containing approximately 42% by weight of methylenebis(phenyl isocyanate)] and 3 parts by weight of a block copolymer of ethylene oxide and propylene oxide comprising a polyethylene glycol having 17 ethylene oxide residues capped with 8 moles of propylene oxide and having an equivalent weight of 1 200. The

mixture was heated, with stirring, at 50°C for 2 h before being cooled to room temperature (circa 20°C). The isocyanate composition so obtained was found to have an isocyanate equivalent of 140.

A sample of the isocyanate composition (1 g.) was emulsified by shaking with 3 ml of water. The isocyanate content of the emulsion was tested immediately after mixing and again 35 min after mixing and, finally, 3 h after mixing. The sample at 35 minutes showed retention of 96% of the original isocyanate content and that at 3 hours showed 83% of the original isocyanate content. The emulsion showed no signs of separation at the end of the 3 h period.

The above experiment was repeated but increasing the proportion of block copolymer to 5 parts by weight. An emulsion was preapred by shaking 1 g. of the composition with 3 ml of water. The resulting emulsion showed no sign of separation after standing for 3 h.

Example 2

Using the procedure described in Example 1 and employing the same block copolymer in the same proportion (3 parts by weight of block copolymer and 100 parts of polyisocyanate) but varying the viscosity and methylenebis(phenyl isocyanate) content of the polyisocyanate there were obtained four emulsifiable isocyanate compositions in accordance with the invention. The polyisocyanate starting material and the isocyanate equivalent (I.E.), viscosity and methylenebis(phenyl isocyanate) (MDI) content of the four products is shown in Table I below.

TABLE I

| | | | Product properties | |
|---|---|---|---|---|
| Product Number | Polyisocyanate starting material | I.E. | Viscosity mPas at 25°C | Diisocyanate content % W/W |
| 2-1 | A[1] | 140.8 | 209 | 39.7 |
| 2-2 | B[2] | 141.6 | 432 | 37.8 |
| 2-3 | C[3] | 144.1 | 830 | 34.5 |
| 2-4 | D[4] | 145.7 | 1,282 | 33.2 |

Footnotes:

[1]: Same polyisocyanate as in Example I.

[2]: Polymethylene polyphenyl polyisocyanate: I.E.=138; viscosity=350 mPas at 25°C; methylenebis(phenyl isocyanate) content=41%.

[3]: Polymethylene polyphenyl polyisocyanate: I.E.=140; viscosity=667 mPas at 25°C; MDI content=38%.

[4]: Polymethylene polyphenyl polyisocyanate: I.E.=142; viscosity=1084 mPas at 25°C; MDI content=36%.

Samples of each of the above compositions were emulsified by dispersion in water (3 ml. per gram of isocyanate composition) and the resulting emulsions showed no sign of separation after 3 hours.

Example 3

A series of samples of wood particle board was prepared using the following procedure from the components and quantities of components (all parts by weight).

The woodchips (60% softwood, 40% hardwood; 1 759 g.) were placed in a "Loedige® batch mixer" and mixed, while the particles were sprayed with the aqueous emulsion of the polyisocyanate which emulsion had been prepared by stirring by hand the emulsifiable isocyanate (102 g) with water (163 g). The emulsion was sprayed through a pneumatic atomizing nozzle on the wood particles while mixing for 2 min with the mixer running at 1 000 rpm to achieve homogeneity. The coated particles were formed into a felted mat on a 50 cm.×60 cm. cold rolled steel plate (which was pretreated with Wurtz T36/NE®, an external release agent) with the aid of a plywood forming frame. After removal of the forming frame, steel bars, having a thickness corresponding to the desired thickness (10 mm) of the final particle board, were placed along two opposing edges of the aforesaid steel plate and a second 50 cm.×60 cm. steel plate was placed on top of the mat. The complete assembly was then placed on the lower platen of a hot press having a capacity of 254545 kg of force. Both plates of the press were preheated to 180°C temperature. The press then was closed and held for 120 s. At the expiry of the molding time the pressure was released and the particle board was demolded.

Using the above procedure particle boards were prepared using each of the emulsifiable isocyanates described in Example 2. In all cases the boards so obtained had excellent physical properties comparable to those obtained using the original polyisocyanates (i.e., the free polyisocyanate not converted to the emulsifiable form) in accordance with prior art processes.

**Claims for the Contracting States: BE, CH, DE, FR, GB, IT, LI, NL, SE**

1. An isocyanate composition capable of yielding an emulsion on admixture with water, said composition comprising the product of reaction of

(a) a polymethylene polyphenyl polyisocyanate containing from 10% to 90% by weight of methylenebis(phenyl isocyanate), the remainder of said polyisocyanate comprising oligomeric polymethylene polyphenyl polyisocyanates of functionality greater than 2.0; and
(b) from 0.001 to 0.2 equivalents, per equivalent of said polyisocyanate, of a hydroxyl containing compound selected from at least one compound having the formula

$$R^1{-}(CH_2CH_2O)_{3-25}{-}R^2 \qquad (I)$$

wherein $R^1$ represents a group selected from the class consisting of alkoxy, carbalkoxy, aryloxy and

$$HO{-}\left(CH_2{-}\underset{CH_3}{CH}{-}O\right)_{2-15}{-} \qquad \text{and}$$

$R^2$ represents a group having the formula

$$-\left(CH_2{-}\underset{CH_3}{CH}{-}O\right)_{2-15}{-}H$$

2. An isocyanate composition according to Claim 1 wherein the polymethylene polyphenyl polyisocyanate contains from 25% to 65% by weight of methylenebis(phenyl isocyanate) the remainder of said polyisocyanate comprising oligomers of functionality greater than 2.0.

3. An isocyanate composition according to Claim 1 wherein the hydroxyl containing compound is a diol having an average structure represented by the formula:

$$HO{-}\left(CH_2{-}\underset{CH_3}{CH}{-}O\right)_{2-15}{-}(CH_2CH_2O)_{3-25}\left(CH_2{-}\underset{CH_3}{CH}{-}O\right)_{2-15}{-}H$$

4. An isocyanate composition according to Claim 3 wherein said diol has a molecular weight of the order of 1,200 to 1,400 and the percentage by weight of propylene oxide residues is from 20 to 50.

5. A composition adapted for use as a binder for the preparation of particle board, said composition comprising an aqueous emulsion derived by dispersing in water an isocyanate composition according to Claim 1.

6. A process for the preparation of a composite board wherein particles of organic material capable of being compacted are contacted with polyisocyanate binder composition and the treated particles are subsequently formed into boards by the application of heat the pressure, characterized by employing as the polyisocyanate binder composition an aqueous emulsion derived by dispersing the water an isocyanate composition in accordance with Claim 1.

**Claims for the Contracting State: AT**

1. Process for the preparation of an isocyanate composition capable of yielding an emulsion on admixture with water, characterized by reacting:

(a) a polymethylene polyphenyl polyisocyanate containing from 10% to 90% by weight of methylenebis(phenyl isocyanate), the remainder of said polyisocyanate comprising oligomeric polymethylene polyphenyl polyisocyanates of functionality greater than 2.0; and
(b) from 0.001 to 0.2 equivalents, per equivalent of said polyisocyanate, of a hydroxyl containing compound selected from at least one compound having the formula

$$R^1{-}(CH_2CH_2O)_{3-25}{-}R^2 \qquad (I)$$

wherein $R^1$ represents a group selected from the class consisting of alkoxy, carbalkoxy, acryloxy and

$$HO{-}\left(CH_2{-}\underset{CH_3}{CH}{-}O\right)_{2-15}{-}$$

$R^2$ represents a group having the formula

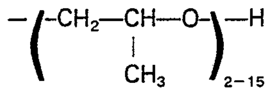

2. Process according to claim 1, characterized by using as reactant (a) polymethylene polyphenyl polyisocyanate containing from 25% to 65% by weight of methylenebis(phenyl isocyanate) the remainder of said polyisocyanate comprising oligomers of functionality greater than 2.0.

3. Process according to claim 1 characterized by using as the hydroxyl containing compound (b) is a diol having an average structure represented by the formula:

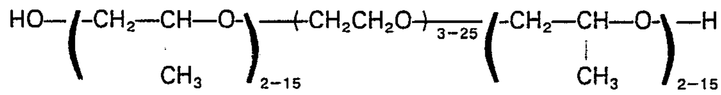

4. Process according to claim 3, characterized by using a diol having a molecular weight of the order of 1,200 to 1,400, wherein the percentage by weight of propylene oxide residues is from 20 to 50.

5. Process for the preparation of a composition adapted for use as a binder for the preparation of particle board, characterized by dispersing in water an isocyanate composition prepared according to claim 1, to obtain an aqueous emulsion.

6. Use of a polyisocyanate binder composition obtained according to claim 1 in a process for the preparation of a composite board wherein particles of organic material capable of being compacted are contacted with polyisocyanate binder composition and the treated particles are subsequently formed into boards by the application of heat and pressure.

**Patentansprüche für die Vertragsstaaten: BE, CH, DE, FR, GB, IT, LI, NL, SE**

1. Isocyanatmasse, die beim Vermischen mit Wasser eine Emulsion liefert, bestehend aus dem Reaktionsprodukt von

(a) einem Polymethylenpolyphenylpolyisocyanat mit 10—90 Gew.-% Methylenbis(phenylisocyanat) und zum Rest oligomeren Polymethylenpolyphenylpolyisocyanaten einer Funktionalität von über 2,0 und
(b) 0,001—0,2 Äquivalent (pro Äquivalent des Polyisocyanats) mindestens einer hydroxylhaltigen Verbindung der Formel:

$$R^1\!-\!(CH_2CH_2O)_{3-25}\!-\!R^2 \qquad (I)$$

worin $R^1$ für eine Alkoxy-, Carbalkoxy- oder Aryloxygruppe oder eine Gruppe der Formel

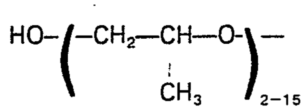

steht und
$R^2$ einer Gruppe der Formel:

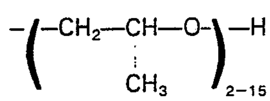

entspricht.

2. Isocyanatmasse nach Anspruch 1, dadurch gekennzeichnet, daß das Polymethylenpolyphenylpolyisocyanat 25—65 Gew.-% Methylenbis(phenylisocyanat) und zum Rest Oligomere einer Funktionalität von über 2,0 enthält.

3. Isocyanatmasse nach Anspruch 1, dadurch gekennzeichnet, daß die hydroxylhaltige Verbindung aus einem Diol einer durchschnittlichen Struktur der Formel:

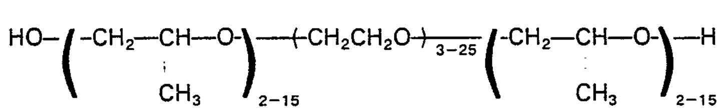

besteht.

4. Isocyanatmasse nach Anspruch 3, dadurch gekennzeichnet, daß das Diol ein Molekulargewicht in der Größenordnung von 1 200—1 400 aufweist und 20—50 Gew.-% Propylenoxidreste enthält.

5. Masse zur Verwendung als Bindemittel bei der Herstellung von Holzwerkstoffen (Spanplatten) in Form einer durch Dispergieren einer Isocyanatmasse nach Anspruch 1 in Wasser erhaltenen wäßrigen Emulsion.

6. Verfahren zur Herstellung einer Verbundplatte, bei welchem Teilchen eines verfestigbaren organischen Materials mit einer Polyisocyanatbindemittelmasse in Berührung gebracht und danach die behandelten Teilchen durch Anwendung von Wärme und Druck zu Platten ausgeformt werden, dadurch gekennzeichnet, daß man als Polyisocyanatbindemittelmasse eine durch Dispergieren einer Isocyanatmasse gemäß Anspruch 1 in Wasser erhaltene wäßrige Emulsion verwendet.

**Patentansprüche für den Vertragsstaat: AT**

1. Verfahren zur Zubereitung einer beim Vermischen mit Wasser eine Emulsion liefernden Isocyanatmasse, dadurch gekennzeichnet, daß man

(a) ein Polymethylenpolyphenylpolyisocyanat mit 10—90 Gew.-% Methylenbis(phenylisocyanat) und zum Rest oligomeren Polymethylenpolyphenylpolyisocyanaten einer Funktionalität von über 2,0 und
(b) 0,001—0,2 Äquivalent (pro Äquivalent des Polyisocyanats) mindestens einer hydroxylhaltigen Verbindung der Formel

$$R^1{-}(CH_2CH_2O)_{3-25}{-}R^2 \qquad (I)$$

worin $R^1$ für eine Alkoxy-, Carbalkoxy- oder Acryloxygruppe oder eine Gruppe der Formel:

$$HO{-}\left(CH_2{-}\underset{CH_3}{CH}{-}O\right)_{2-15}{-}$$

steht und $R^2$ einer Gruppe der Formel:

$$-\left(CH_2{-}\underset{CH_3}{CH}{-}O\right)_{2-15}{-}H$$

entspricht, reagieren läßt.

2. Verfahren nach Anspruch 1, dadurch gekennzeichnet, daß man als Reaktionsteilnehmer (a) ein Polymethylenpolyphenylpolyisocyanat mit 25—65 Gew.-% Methylenbis(phenylisocyanat) und zum Rest Oligomeren einer Funktionalität von über 2,0 verwendet.

3. Verfahren nach Anspruch 1, dadurch gekennzeichnet, daß man als hydroxylhaltige Verbindung (b) ein Diol einer Durchschnittsstruktur der Formel:

$$HO{-}\left(CH_2{-}\underset{CH_3}{CH}{-}O\right)_{2-15}{-}(CH_2CH_2O)_{3-25}{-}\left(CH_2{-}\underset{CH_3}{CH}{-}O\right)_{2-15}{-}H$$

verwendet.

4. Verfahren nach Anspruch 3, dadurch gekennzeichnet, daß man ein Diol eines Molekulargewichts in der Größenordnung von 1 200—1 400 mit 20—50 Gew.-% Propylenoxidresten verwendet.

5. Verfahren zur Zubereitung einer als Bindemittel für die Herstellung von Holzwerkstoffen (Spanplatten) geeigneten Masse, dadurch gekennzeichnet, daß man zur Herstellung einer wäßrigen Emulsion eine gemäß Anspruch 1 zubereitete Isocyanatmasse in Wasser dispergiert.

6. Verwendung einer gemäß Anspruch 1 erhaltenen Polyisocyanatbindemittelmasse bei einem Verfahren zur Herstellung einer Verbundplatte, bei welchem Teilchen eines verfestigbaren organischen Materials mit der Polyisocyanatbindemittelmasse in Berührung gebracht und die behandelten Teilchen danach durch Anwendung von Wärme und Druck zu Platten ausgeformt werden.

**Revendications pour les états Contractants: BE, CH, DE, FR, GB, IT, LI, NL, SE**

1. Une composition d'isocyanate capable de fournir une émulsion par mélange avec de l'eau, ladite composition comprenant le produit de la réaction de

(a) un polyméthylène polyphényl polyisocyanate contenant de 10% à 90% en poids de méthylène bis (isocyanate de phényle) le reste dudit polyisocyanate comprenant des polyméthylène polyphényl polyisocyanates oligomères de fonctionnalité supérieure à 2,0; et

(b) de 0,001 à 0,2 équivalent, par équivalent dudit polyisocyanate, d'un composé hydroxylé choisi parmi au moins un composé répondant à la formule:

$$R^1\text{-}(CH_2CH_2O)_{3-25}\text{-}R^2 \qquad (I)$$

dans laquelle:

$R^1$ représente un groupe choisi dans la catégorie constituée par alcoxy, carbalcoxy, aryloxy et

$$HO-\left(-CH_2-\underset{CH_3}{CH}-O-\right)_{2-15}-$$

et

$R^2$ représente un groupe de formule

$$-\left(-CH_2-\underset{CH_3}{CH}-O-\right)_{2-15}-H$$

2. Une composition d'isocyanate selon la revendication 1, dans laquelle le polyméthylène polyphényl polyisocyanate contient 25% à 65% en poids de méthylène bis(isocyanate de phényle) le reste dudit polyisocyanate comprenant des oligomères de fonctionnalité supérieure à 2.0.

3. Une composition d'isocyanate selon la revendication 1, dans laquelle le composé hydroxylé est un diol ayant une structure moyenne représentée par la formule:

$$HO-\left(-CH_2-\underset{CH_3}{CH}-O-\right)_{2-15}-(CH_2CH_2O)_{3-25}\left(-CH_2-\underset{CH_3}{CH}-O-\right)_{2-15}-H$$

4. Une composition d'isocyanate selon la revendication 3, dans laquelle ledit diol a un poids moléculaire de l'ordre de 1 200 à 1 400 où le pourcentage pondéral des restes d'oxyde de propylène est de 20 à 50.

5. Une composition adaptée à l'emploi comme liant pour la préparation d'un panneau de particules, ladite composition comprenant une émulsion aqueuse obtenue par dispersion dans l'eau d'une composition d'isocyanate selon la revendication 1.

6. Un procédé pour la préparation d'un panneau composite dans lequel des particules d'une matière organique pouvant être agglomérées sont mises en contact avec la composition liante de polyisocyanate et les particules traitées sont ensuite formées en panneaux par application de chaleur et de pression, caractérisé par l'emploi comme composition liante de polyisocyanate d'une émulsion aqueuse obtenue par dispersion dans l'eau d'une composition d'isocyanate selon la revendication 1.

**Revendications pour l'état Contractant AT**

1. Procédé pour la préparation d'une composition d'isocyanate capable de fournir une émulsion en mélange avec l'eau, caractérisé par la réaction de:

(a) un polyméthylène polyphényl polyisocyanate contenant de 10% à 90% en poids de méthylène bis (isocyanate de phényle) le reste dudit polyisocyanate comprenant des polyméthylène polyphényl polyisocyanates oligomères de fonctionnalité supérieure à 2,0; et
(b) de 0,001 à 0,2 équivalent, par équivalent dudit polyisocyanate, d'un composé hydroxylé choisi parmi au moins un composé répondant à la formule:

$$R^1\text{-}(CH_2CH_2O)_{3-25}\text{-}R^2 \qquad (I)$$

dans laquelle:

$R^1$ représente un groupe choisi dans la catégorie constituée par alcoxy, carbalcoxy, aryloxy et

$$HO-\left(-CH_2-\underset{CH_3}{CH}-O-\right)_{2-15}-$$

et

$R^2$ représente un groupe de formule

$$-\left(-CH_2-\underset{\displaystyle CH_3}{CH}-O-\right)_{2-15}-H$$

2. Procédé selon la revendication 1, caractérisé par l'emploi comme composé réagissant (a) de polyméthylène polyphényl polyisocyanate contenant de 25% à 65% en poids de méthylène bis(isocyanate de phényle) le reste dudit polyisocyanate comprenant des oligomères de fonctionnalité supérieure à 2.0.

3. Procédé selon la revendication 1, caractérisé par l'emploi comme composé hydroxylé (b) d'un diol ayant une structure moyenne représentée par la formule:

$$HO-\left(-CH_2-\underset{\displaystyle CH_3}{CH}-O-\right)_{2-15}-\left(CH_2CH_2O\right)_{3-25}-\left(-CH_2-\underset{\displaystyle CH_3}{CH}-O-\right)_{2-15}-H$$

4. Procédé selon la revendication 3, caractérisé par l'emploi d'un diol ayant un poids moléculaire de l'ordre de 1 200 à 1 400 où le pourcentage pondéral des restes d'oxyde de propylène est de 20 à 50.

5. Procédé pour la préparation d'une composition adaptée à l'emploi comme liant pour la préparation d'un panneau de particules, caractérisé par la dispersion dans l'eau d'une composition d'isocyanate préparée selon la revendication 1 pour obtenir une émulsion aqueuse.

6. Utilisation d'une composition liante de polyisocyanate obtenue selon la revendication 1, dans un procédé pour la préparation d'un panneau composite dans lequel des particules d'une matière organique pouvant être agglomérées sont mises en contact avec la composition liante de polyisocyanate et les particules traitées sont ensuite formées en panneaux par application de chaleur et de pression.